(19) Europäisches Patentamt
European Patent Office
Office européen des brevets

(11) EP 0 607 085 B1

(12) **FASCICULE DE BREVET EUROPEEN**

(45) Date de publication et mention de la délivrance du brevet: **06.05.1998 Bulletin 1998/19**

(51) Int. Cl.[6]: **B29C 47/02**, F16L 11/04, B32B 1/08

(21) Numéro de dépôt: **94400071.0**

(22) Date de dépôt: **12.01.1994**

(54) **Article tubulaire composite formé d'un élastomère vulcanisé associé à un élastomère thermoplastique à séquences polyamide, notamment tuyau à essence et procédé de préparation d'un tel article**

Schlauchförmiger Verbundgegenstand aus einem vulkanisierten Elastomer und einem thermoplastischen, Polyamidsequenzen enthaltenden Elastomer, insbesondere für einen Kraftstoffschlauch, und Verfahren zu seiner Herstellung

Composite tubular article composed of a vulcanized elastomer associated with a thermoplastic elastomer containing polyamide sequences, specially for a fuel hose and process for its manufacture

(84) Etats contractants désignés:
**AT BE CH DE DK ES FR GB GR IE IT LI LU NL PT SE**

(30) Priorité: **13.01.1993 FR 9300226**

(43) Date de publication de la demande: **20.07.1994 Bulletin 1994/29**

(73) Titulaire: **ELF ATOCHEM S.A.**
**92800 Puteaux, Hauts-de-Seine (FR)**

(72) Inventeurs:
- **Hert, Marius**
  **F-27470 Serquigny (FR)**
- **Dousson, Christian**
  **F-27300 ST Victor de Chretienville (FR)**
- **Nawrot, Serge**
  **F-27470 Serquigny (FR)**

(74) Mandataire:
**Warcoin, Jacques et al**
**Cabinet Régimbeau,**
**26, avenue Kléber**
**75116 Paris (FR)**

(56) Documents cités:
**EP-A- 0 550 346**
**DE-A- 3 439 312**
**DE-A- 3 914 011**
**DE-A- 4 026 161**
**DE-A- 4 132 123**

- **DATABASE WPI Week 9041, Derwent Publications Ltd., London, GB; AN 90-308685 & JP-A-2 217 683 (TOYOBO) 30 Août 1990**
- **DATABASE WPI Week 9218, Derwent Publications Ltd., London, GB; AN 92-146130 & JP-A-4 086 258 (TOYOBO) 18 Mars 1992**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 607 085 B1

## Description

La présente invention concerne un article tubulaire composite formé d'une gaine externe d'un élastomère vulcanisé, contenant des fonctions acide carboxylique ou anhydride de diacide carboxylique, directement associé à un tube d'élastomère thermoplastique à séquences polyamide. Elle concerne également un procédé de préparation d'un article tubulaire composite constitué d'un élastomère vulcanisé directement associé à un tube d'élastomère thermoplastique à séquences polyamide. Elle concerne encore les tuyaux, notamment d'amenée de carburants, formés de tels articles tubulaires.

Les procédés d'assemblage d'articles tubulaires d'élastomère vulcanisé synthétique ou naturel associé à des thermoplastiques les plus couramment utilisés sont basés sur l'extrusion-gainage d'un tube de thermoplastique préalablement adhésivé avec une colle, souvent à base de polyuréthane bicomposant. La couche externe d'élastomère est ensuite vulcanisée dans un autoclave à air chaud, à pression de vapeur, à rayonnement, usuels dans l'industrie du caoutchouc.

Néanmoins, une importante économie au niveau du procédé pourrait être réalisée en supprimant l'application de l'adhésif.

On connait par le document DE-A-3439312 un article tubulaire double couche consistant en :

- une couche interne d'un mélange de caoutchouc et de polyamide, le polyamide formant la matrice et le caoutchouc étant présent en tant que phase dispersée, le mélange étant vulcanisé,
- une couche externe d'un matériau polyoléfinique contenant des groupements fonctionnels qui permettent la liaison avec le mélange polyamide-caoutchouc.

Parmi les polyamides, ce document cite le Nylon 6, le Nylon 6-6, le Nylon 12, le Nylon 6-9, le Nylon 6-10, le Nylon 8 ou un mélange ou copolymérisat de ces polyamides.

On connait, par ailleurs, la réactivité de certains élastomères sur des polymères à base de polyétheresteramide. Ainsi, le brevet japonais JP 63 081158 (DW 88-138018/20) décrit une composition élastomérique thermoplastique constituée d'un composant polyétheresteramide et d'un élastomère ayant au moins un groupe polaire tel qu'un radical carboxylique.

Parmi ces élastomères, sont cités les élastomères acryliques, les élastomères à base de butadiène et d'acrylonitrile (élastomère nitrile) et les élastomères fluorés (propylène/tétrafluoroéthylène). Ces compositions élastomériques thermoplastiques ont une flexibilité élevée, une bonne résistance à l'huile et une résistance mécanique élevée.

Un des objets de la présente invention est de proposer un procédé de préparation d'article tubulaire composite tel que défini ci-dessus, évitant l'application d'un adhésif.

Un autre objet de la présente invention est de proposer un procédé de préparation d'articles tubulaires composites tel que mentionné ci-dessus, qui soit industrialisable, utilisant les procédés d'extrusion gainage.

Un autre objet de la présente invention est de proposer un article tubulaire tel que défini ci-dessus présentant une force de pelage élevée de l'élastomère vulcanisé lors de la sollicitation à la séparation.

D'autres avantages liés à la mise en oeuvre de la présente invention apparaîtront au cours de la description ci-après.

L'invention a en premier lieu pour objet un article tubulaire composite caractérisé en ce qu'il est formé d'une gaine externe d'un élastomère vulcanisé contenant des fonctions acide carboxylique ou anhydride de diacide carboxylique, directement associée à un tube d'élastomère thermoplastique polyéther à blocs polyamide ayant un point de fusion compris entre 120° et 210°C et un point Vicat compris entre 100 et 200°C et en ce qu'il est obtenu par gainage de l'élastomère thermoplastique polyéther à blocs polyamide, par extrusion à une température appropriée d'une composition élastomérique comportant un élastomère synthétique ou naturel contenant des fonctions acide carboxylique ou anhydride de diacide carboxylique, un système de réticulation et éventuellement divers adjuvants et charges, et en ce que la gaine de composition élastomérique est vulcanisée, à une température comprise entre - 5°C et + 30°C par rapport au point Vicat dudit élastomère thermoplastique polyéther à blocs polyamide, la cinétique de vulcanisation étant telle que la durée du cycle de vulcanisation ne dépasse pas quinze minutes et en ce que l'article tubulaire composite présente une force de pelage de la couche d'élastomère vulcanisé lors d'une sollicitation à la séparation supérieure à 2 daN/cm.

De préférence, la face interne du tube thermoplastique est revêtue d'une couche interne d'imperméabilisation ou de protection ayant des propriétés barrière notamment à l'encontre des liquides tels que les carburants.

Ces articles tubulaires composites présentent les caractéristiques de souplesse, résistance au choc, tenue au fluage à chaud des caoutchoucs. De plus, lorsqu'ils sont revêtus de ladite couche interne, ils présentent l'imperméabilité requise aux carburants. L'imperméabilité peut être améliorée d'un facteur compris entre 10 et 100 par rapport à celle d'un tube équivalent en caoutchouc tout en conservant les propriétés qui font l'intérêt du caoutchouc. La couche d'élastomère thermoplastique à séquences polyamide est utilisée dans ce cas comme liant.

Les élastomères vulcanisés et thermoplastiques formant le matériau composite sont normalement associés de façon suffisamment forte pour empêcher toute séparation lors d'un effort normal, compte tenu de l'utilisation souhaitée. Ainsi, au sens du présent texte, le terme séparation sous-entend l'application au matériau d'une force considérablement plus élevée que celle à laquelle ledit matériau doit être normalement soumis.

La résistance à la séparation est appréciée par un test de pelage sur une lanière de tube de moins de 5 mm de largeur découpé selon une génératrice. De préférence, la résistance au pelage sera avantageusement supérieure à 2 daN/cm.

L'invention a également pour objet les tuyaux pour véhiculer du carburant, caractérisés en ce qu'ils sont constitués d'un article tubulaire tel que défini ci-dessus.

Les élastomères synthétiques ou naturels vulcanisés convenant pour la mise en oeuvre de la présente invention sont bien connus de l'homme de métier, le terme élastomère dans la définition de la présente invention signifiant que celui-ci peut être constitué de mélanges de plusieurs élastomères.

Ces élastomères ou mélanges d'élastomères présentent une déformation rémanente à la compression (D.R.C.) à 100°C inférieure à 50% généralement entre 5 et 40 % et de préférence inférieure à 30 %. Ces élastomères vulcanisés proviennent des élastomères vulcanisables correspondants.

Parmi ces élastomères vulcanisables, on peut citer le caoutchouc naturel, le polyisoprène ayant un taux élevé de double liaison en position cis, une émulsion polymérisée à base de copolymère styrène/butadiène, une solution polymérisée à base de copolymère styrène/butadiène, un polybutadiène ayant un taux élevé de double liaison en position cis obtenu par catalyse au nickel, cobalt, titane ou néodynium, un terpolymère éthylène halogéné/propylène/diène, un caoutchouc butyle halogéné, un copolymère séquencé styrène/butadiène, un copolymère séquencé styrène/ isoprène, les produits halogénés des polymères ci-dessus, un copolymère acrylonitrile/butadiène, un élastomère acrylique, un élastomère fluoré et le chloroprène.

Dans le cas ou les élastomères mentionnés ci-dessus ne comportent pas de radicaux acide carboxylique ou anhydride desdits acides (ce qui est le cas de la plupart de ceux-ci), lesdits radicaux seront apportés par greffage, de façon connue, des élastomères mentionnés ci-dessus ou par des mélanges d'élastomères, par exemple avec des élastomères acryliques.

Parmi les élastomères mentionnés ci-dessus, on choisira avantageusement ceux compris dans le groupe suivant : les élastomères nitriles carboxylés, les élastomères acryliques, les polybutadiènes carboxylés, les terpolymères éthylène/propylène/diène greffés ou les mélanges de ces polymères avec les mêmes élastomères mais non greffés comme les caoutchoucs nitriles, dont le caoutchouc nitrile hydrogéné (HNBR), le caoutouchc épichlorhydrine

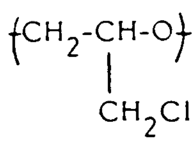

qui peut également contenir des motifs oxyde d'éthylène et/ou acétate de vinyle, les polybutadiènes, les terpolymères éthylène/propylène/diène, seuls ou en mélange.

De préférence, les élastomères vulcanisables précités comportent un taux en poids de radicaux acide carboxylique ou anhydride de diacide carboxylique compris entre 0,3 et 10 % par rapport auxdits élastomères.

De préférence, les élastomères vulcanisés comprennent des charges, le taux de charges étant de préférence compris en parties en poids entre 5 et 100 parties pour 100 parties d'élastomère vulcanisé.

Les élastomères thermoplastiques polyéther à blocs polyamide sont ceux dont les séquences polyamide sont séparées par des séquences polyéther.

De préférence, la séquence polyamide sera choisie parmi les polyamides 6, 11 ou 12 et les séquences polyéthers seront choisies parmi les polyéthylènes oxydes, les polypropylènes oxydes et les polytétraméthylènes oxydes ou un mélange de ces différents motifs de poids moléculaire compris entre 100 et 6000.

Les élastomères thermoplastiques à séquences polyamide utilisés pour mettre en oeuvre le procédé sont des polyéthers à blocs polyamides (ou polyétheramides).

Par polyéthers à blocs polyamides, on entend aussi bien les polyéthers à blocs polyamides statistiques (c'est-à-dire formés par l'enchaînement aléatoire des divers constituants monomères) que les polyéthers à blocs polyamides séquencés, c'est-à-dire de blocs présentant une certaine longueur de chaîne de leurs divers constituants.

Les polyéthers à blocs polyamides convenant pour la présente invention sont bien connus de l'homme du métier. Ils sont obtenus par une réaction de condensation de séquences polyamide à extrémités réactives avec des séquences polyéthers à extrémités réactives, telles que, entre autres :

1° - Séquences polyamides à bouts de chaînes diamines avec des séquences polyoxyalkylènes à bouts de chaînes dicarboxyliques.

2° - Séquences polyamides à bouts de chaînes dicarboxyliques avec des séquences polyoxyalkylènes à bouts de chaînes diamines obtenues par cyanoéthylation et hydrogénation de séquences polyoxyalkylènes alpha-oméga dihydroxylées aliphatiques appelées polyétherdiols.

3° - Séquences polyamides à bouts de chaînes dicarboxyliques avec des polyétherdiols, les polyétheramides obtenus étant, dans ce cas particulier, des polyétheresteramides.

La composition et la fabrication de tels polyétheresteramides ont été décrites dans les brevets français n° 74 18913 et 77 26678 au nom de la Demanderesse et dont le contenu s'ajoute à la présente description.

Selon un mode de réalisation de l'invention, le polyétheramide est un polyétheresteramide séquencé de poids moléculaire supérieur à 10 000, formé du produit de la copolycondensation d'un polyamide ou copolyamide alpha-oméga dicarboxylique présentant un poids moléculaire de 300 à 15 000 et, de préférence, 600 à 5000, employé à raison de 95 à 15 % en poids et d'un polyétherdiol présentant un poids moléculaire de 100 à 6000 et, de préférence 200 à 3000, employé à raison de 5 à 85 % en poids.

Parmi les polyéthers, on peut citer le polyoxyéthylène glycol, le polyoxypropylène glycol, le polyoxytétraméthylène glycol, ayant un poids moléculaire moyen compris entre 100 et 6000, de préférence entre 200 et 3000. Ces polyéthers peuvent également résulter de mélanges de polymères cités ci-avant. L'allongement des chaînes polyéthers est assuré par des liaisons esters.

En ce qui concerne les polyamides, on utilisera de préférence ceux qui sont disponibles et connus sous les dénominations nylon 6, 11, 12, 66, 612.

Avantageusement, ces polyéthers à blocs polyamides auront un point Vicat compris entre 130 et 175°C et un point de fusion compris entre 140 et 180°C.

La face interne du tube thermoplastique est avantageusement revêtue d'une couche interne de protection ou d'imperméabilisation contre notamment les liquides pouvant circuler à l'intérieur des articles tubulaires. Une ou plusieurs couches intermédiaires peuvent être présentes entre cette couche interne d'imperméabilisation et la couche d'élastomère thermoplastique à séquences polyamide.

Les revêtements formant la couche interne peuvent être choisis pour leur imperméabilité aux carburants comme le polyfluorure de vinylidène ou les polyamides 6, 66, 11, 12 et de préférence les polyamides 11 et 12 plastifiés ou non ou leurs copolymères ou des alliages de ces polyamides avec des polyoléfines. L'application de revêtement requiert éventuellement la présence d'un adhésif de coextrusion comme le sait bien l'homme du métier.

Le polyfluorure de vinylidène est habituellement un homopolymère ou un copolymère possédant au moins 70 % en poids de fluorure de vinylidène. Le polyfluorure de vinylidène peut également être mélangé à un autre polymère thermoplastique à condition qu'au moins 50 % en poids de polyfluorure de vinylidène soit présent dans le mélange. En vue d'assurer l'adhésion entre le polyfluorure de vinvlidène et l'élastomère thermoplastique à séquences polyamide on utilise de façon connue une couche intermédiaire constituée d'un polymère possédant des groupements carbonyles sur sa chaîne polymérique, tels qu'un polyuréthanne, une polyurée, un polyester, un copolymère de l'éthylène avec de l'acétate de vinyle, des esters acryliques ou de l'oxyde de carbone, ou des mélanges de ces polymères. Ce liant d'adhésion entre polyfluorure de vinylidène et élastomère thermoplastique à séquences polyamide peut contenir du polyfluorure de vinylidène dans la proportion de 1 à 50 % en poids.

D'autres revêtements bien connus de l'homme du métier peuvent également convenir.

L'invention a également pour objet un procédé de préparation des articles tubulaires composites décrits précédemment, caractérisé en ce qu'un tube d'élastomère thermoplastique polyéther à blocs polyamide est gainé, par extrusion à une température appropriée, d'une composition élastomérique comportant un élastomère synthétique ou naturel contenant des fonctions acide carboxylique ou anhydride de diacide carboxylique, un système de réticulation et éventuellement divers adjuvants et charges, et en ce que la gaine de composition élastomérique est vulcanisée, la température de vulcanisation étant comprise entre -5°C et +30°C par rapport au point Vicat dudit élastomère thermoplastique polyéther à blocs polyamide, la cinétique de vulcanisation étant telle que la durée du cycle de vulcanisation ne dépasse pas 15 minutes et que l'article tubulaire composite présente une force de la couche d'élastomère vulcanisé supérieure à 2daN/cm.

Selon une variante du procédé selon l'invention, la composition élastomérique est extrudée sur une extrudeuse d'élastomère à une température comprise entre 50° et 120°C, dans une filière de gainage dans laquelle est présent, de préférence défile à vitesse constante, un tube d'élastomère thermoplastique polyéther à blocs polyamide et l'article tubulaire non vulcanisé est placé, après découpage éventuel, dans un autoclave de vulcanisation usuel de caoutchouc (notamment à air chaud, à infrarouge etc.) dont la température est comprise entre -5°C et +30°C par rapport au point Vicat dudit élastomère thermoplastique à séquences polyamide.

Le tube peut être maintenu à ses dimensions initiales, en cours de vulcanisation, en l'équipant d'une tige métallique cylindrique calibrée au diamètre interne du tube.

Ce procédé conduit à des tubes ayant d'excellentes propriétés notamment de souplesse et de résistance au

pelage de la couche externe.

Les élastomères vulcanisables et thermoplastiques sont ceux qui ont été décrits précédemment à l'occasion de l'article tubulaire composite.

En ce qui concerne les polyéthers à blocs polyamide, on se réfèrera également à l'exposé précédant concernant l'article tubulaire composite.

Les systèmes de vulcanisation convenant pour la présente invention sont bien connus de l'homme de métier et en conséquence, l'invention n'est pas limitée à un type particulier de systèmes. Il suffit que celui-ci réponde au critère concernant la cinétique de vulcanisation définie dans la définition de l'invention indiquée précédemment.

Lorsque l'élastomère est à base de monomère insaturé (butadiène, isoprène, vinylidène-norbornène...) on peut citer quatre types de systèmes de vulcanisation :

- Systèmes au soufre constitués de soufre associé aux accélérateurs usuels tels que les sels métalliques de dithiocarbamates (diméthyl dithiocarbamate de zinc, de tellure etc.) les disulfures de thiurame (tétraméthyl disulfure de thiuranne, etc.,) les sulfénamides, etc.

  Ces systèmes peuvent contenir également de l'oxyde de zinc associé à de l'acide stéarique.

- Systèmes donneurs de soufre dans lesquels la majorité du soufre utilisé pour les pontages, provient de molécules soufrées telles que les composés organosoufrés cités plus haut.
- Systèmes aux résines phénoliques constitués de résines formophénoliques difonctionnelles pouvant être halogénées associées à des accélérateurs tels que le chlorure stanneux, l'oxyde de zinc.
- Systèmes aux peroxydes. Tous les donneurs de radicaux libres peuvent être utilisés (peroxydes de dicumyle, etc.) en association avec l'oxyde de zinc et l'acide stéarique.

Lorsque l'élastomère est acrylique (polyacrylate de butyle avec fonctions acides ou époxy ou toute autre fonction réactive permettant la réticulation) on utilise les réticulants habituels à base de diamines (orthotoluidyl guanidine, diphénylguanidine, etc.) ou de diamines bloquées (carbamate d'hexaméthylène diamine etc.).

Les compositions élastomériques peuvent être modifiées pour certaines propriétés particulières (amélioration des propriétés mécaniques par exemple) par l'addition de charges telles que le noir de carbone, la silice, le kaolin, l'aluminium, l'argile, le talc, la craie, etc. Ces charges peuvent être traitées en surface par des silanes, des polyéthylèneglycols ou toute autre molécule de couplage. En général, le taux de charges en parties en poids est compris entre 5 et 100 pour 100 parties d'élastomères.

En outre, les compositions peuvent être assouplies par des plastifiants tels que les huiles minérales dérivées du pétrole, les esters de l'acide phtalique ou de l'acide sébacique, les plastifiants polymères liquides tels que le polybutadiène de faible masse éventuellement carboxylé, et d'autres plastifiants bien connus de l'homme du métier.

Les combinaisons d'agent de vulcanisation utilisées pour mettre en oeuvre le procédé sont telles qu'elles doivent permettre une réticulation complète de l'élastomère selon une cinétique conduisant à de bonnes propriétés de résistances à la séparation, telles que mentionnées dans la définition de l'invention et en général, à de bonnes propriétés caoutchoutiques (mesurées par une déformation rémanente à la compression à 100°C, des propriétés dynamométriques en traction, etc.).

De préférence, la température de vulcanisation est sensiblement égale au point Vicat de l'élastomère thermoplastique à séquences polyamide avec une tolérance de ± 5°C.

La température de vulcanisation dans l'autoclave sera avantageusement comprise entre 130 et 180°C.

Avantageusement, la cinétique mesurée à l'aide d'un rhéomètre oscillant sera telle que le temps caractéristique de vulcanisation à 90 %, $t_{90}$, ne dépasse pas 15 minutes et avantageusement sera compris entre 5 et 10 minutes.

Par ailleurs, il a été trouvé que le temps de démarrage de vulcanisation (ou temps de prise) correspondant à une augmentation de couple de 0,2 N.m était un facteur important pour obtenir des matériaux présentant de bonnes performances. Ainsi, il est avantageux que l'augmentation de couple précité soit atteinte dans un temps supérieur ou égal à 4 minutes à la température de moulage et de préférence entre 4 et 6 minutes.

En ce qui concerne le point dit Vicat ou encore point de ramollissement, on sait que c'est un paramètre bien connu pour mesurer les propriétés physiques d'un polymère. Le point Vicat est la température à laquelle une aiguille ayant une section transversale circulaire de 1 $mm^2$ pénètre de 1 mm de profondeur dans l'échantillon lors d'une montée de température de 50°C par heure selon la norme ASTM D1525. Ainsi, à cette température, le polymère ne flue pas et n'est pas à l'état fondu.

De façon générale, le procédé consiste à extruder ou à coextruder un tube de polymères thermoplastiques ayant dans tous les cas une couche externe d'élastomère thermoplastique à séquences polyamide d'au moins 0,1 mm d'épaisseur, un diamètre interne compris entre 5 mm et 90 mm et une épaisseur de paroi comprise entre 0,4 et 10 mm sur une ligne d'extrusion ou de coextrusion équipé d'une filière tube, à des vitesses variant entre 5 et 80 m/min.

Lorsque le tube de polymères thermoplastiques contient une couche interne de protection de polyamide à point de fusion supérieur à 220°, par exemple du polyamide 6 ou du polyamide 66, la vulcanisation de la gaine de composition élastomérique peut être réalisée en continu par exemple dans un four UHF placé en ligne avec l'extrudeuse de gainage. Dans ce cas, la température du four (UHF par exemple) peut monter à 180°C.

La composition élastomérique comportant l'élastomère avec ses charges, plastifiants et autres adjuvants, mais sans le système de réticulation est formulée dans un mélangeur approprié, puis elle est reprise éventuellement dans un autre mélangeur, à une température appropriée avec le système de vulcanisation.

Ces opérations de formulation sont réalisées à des températures inférieures à 120° de façon à ce que le système de vulcanisation reste inactif. La formulation élastomère est conditionnée sous forme de bandes telles qu'on les utilise habituellement pour alimenter des extrudeuses d'élastomère.

La formulation élastomère ainsi conditionnée est extrudée à une température suffisamment basse pour qu'elle ne réticule pas, puis le composite formé est transporté dans un autoclave de vulcanisation où la couche externe est vulcanisée à une température correspondant au point Vicat de l'élastomère thermoplastique à séquences polyamide avec une fourchette de -5°C à +30°C.

Le rapport d'épaisseur entre la couche externe d'élastomère et les couches de polymères thermoplastiques est compris entre 1 et 10.

Lorsque la vulcanisation en autoclave est terminée, au bout d'un temps inférieur à 15 minutes, avantageusement compris entre 5 et 10 minutes, déterminé au préalable par le $t_{90}$ du rhéomètre oscillant, l'article tubulaire est retiré de l'autoclave.

Lorsque l'on change l'épaisseur de paroi du tube thermoplastique, on applique une formule empirique bien connue dans la technique de vulcanisation des élastomères :

$$\text{Temps de vulcanisation (min)} = t_{90} + \left(\frac{E}{2} - 2\right)$$

E étant l'épaisseur en mm. 2

Les exemples ci-dessous illustrent l'invention sans toutefois la limiter.

Selon un procédé général de mise en oeuvre commun à tous les exemples décrits, la composition élastomérique sans le système de réticulation est formulée sur un mélangeur interne Repiquet R10de 10 litres, dont les rotors tournent à 60 rpm. L'opération se fait en régime semi-adiabatique, avec transformation de l'énergie mécanique en chaleur. On obtient un mélange intime en moins de 5 minutes et la température atteint 110°C.

L'élastomère ainsi formulé est ensuite repris sur un mélangeur à cylindres chauffés à 80°C et on lui rajoute le système de vulcanisation.

Les tubes en polymères thermoplastiques sont produits sur une installation de coextrusion équipée d'une tête tricouches et de trois extrudeuses de diamètre de vis 45 mm, 30 mm et 45 mm, opérant à une vitesse de ligne de 20 m/min. La tête de coextrusion est équipée d'une filière de 6/8 mm. L'élastomère thermoplastique qui fera office de liant avec l'élastomère vulcanisable est toujours extrudé en couche externe. Ce tube est repris, en une deuxième étape sur une installation de gainage d'élastomère ayant une filière de recouvrement calibrée à 8 mm et opérant à une vitesse de défilement de 15 m/min. La température d'extrusion de l'élastomère est de 85°. La vulcanisation est réalisée en four à air chaud, en discontinu, en se conformant au processus opératoire déjà décrit.

La perméabilité à l'essence de ces tubes est mesurée selon une méthode statique à 23°C avec du fuel C contenant 15 % de méthanol.

Exemple 1 comparatif

Une composition réalisée en mélangeur interne comprenant en parties en poids :

| | | |
|---|---|---|
| - un élastomère butadiène/acrylonitrile/acide acrylique chemigum 775 69/24/7 | | 70 |
| - un PVC de KWert 70 LACOVYL SK 70 | | 30 |
| - une stabilisation du PVC | Octyle d'étain | 0,3 |
| | stéarate de zinc | 0,3 |
| - de l'huile de soja époxydée | | 1,5 |
| - du phtalate de dioctyle | | 25 |

(suite)

| | |
|---|---|
| - un antioxydant de l'élastomère | 7 |
| - du noir de carbone FEF N 550 | 40 |
| - de la silice ultrasil VN3 | 10 |
| - du polyéthylène glycol PEG 4000 | 2 |
| - du polybutadiène carboxylé Polyvest C70 | 4 |

Cette composition est mélangée sur cylindre à un système de vulcanisation de composition :

| | |
|---|---|
| Soufre | 1,6 |
| Disulfure de tétraméthylthiuranne TMTD | 1,5 |
| Mercaptobenzylsulfénamide MBS | 1,5 |
| Oxyde de zinc | 5 |
| Acide stéarique | 1 |

Elle est extrudée sur une extrudeuse d'élastomère en tube de 6/10 mm puis vulcanisée à 160° pendant 10 minutes.

- La perméabilité à l'essence de cet article tubulaire est de 850 g/m$^2$ x 24 heures (par mm d'épaisseur)

Absence de marquage de l'article tubulaire lorsqu'on le plie et retour à sa forme initiale.

Exemple 2 comparatif

Un tube coextrudé de PAl2 Rilsan AESNTL et d'élastomère thermoplastique à séquences de PAl2 commercialisé sous la marque Pebax 5533, à point Vicat de 145° est réalisé en diamètre 6/8 mm, avec une couche externe de Pebax 5533 de 0,2 mm. La perméabilité à l'essence de cet article tubulaire est de 80 g/m$^2$ x 24 heures pour 1 mm d'épaisseur. Lorsqu'on plie cet article tubulaire en dessous d'un certain rayon de courbure, il se produit un phénomène de craquage et l'article tubulaire est marqué.

Exemple 3

Le tube de l'exemple 2 est repris sur une installation de gainage d'élastomère, extrudant la composition de l'exemple 1 à 87°C à travers une filière de gainage.

L'article tubulaire est ensuite coupé, entringlé sur une des tiges métalliques de 6 mm et placé dans une étuve à air chaud à 155° pendant 20 minutes. Ses dimensions transversales sont de 6/10 mm après gainage. La perméabilité à l'essence de ce tube est de 75 g/m$^2$ x 24 heures ramené à 1 mm d'épaisseur. Cet article tubulaire peut être plié à un rayon de courbure beaucoup plus faible que le tube de l'exemple 1 et ne conserve aucune marque de pliure.

Exemple 4 comparatif

Un article de dimensions 6/8 mm obtenu sur une installation de coextrusion tricouches est constitué de :

- une couche externe d'élastomère thermoplastique à séquence PAl2 (Pebax 6333) à point Vicat 161° ayant 0,6 mm d'épaisseur.
- une couche de 0,15 mm d'épaisseur d'un mélange constitué de 65 parties en poids de polyuréthanne (Estane 58271),
- 35 parties en poids d'un copolymère éthylène acétate de vinyle OREVAC 9307,
- une couche de polyfluorure de vinylidène (FORAFLON 4000H) de 0,25 mm d'épaisseur.

Cet article est rigide et présente une mauvaise résistance à la pliure.

Exemple 5

L'article de l'exemple 4 est repris sur une installation de gainage d'élastomère extrudant la composition de l'exemple 1 à 87° à travers une filière gainage, et vulcanisé selon le procédé décrit dans l'exemple 3 à 160° pendant 15 min.

Ses dimensions sont de 6/10 mm après gainage.

La perméabilité de l'essence de ce tube est de 10 g/mm$^2$ x 24 h (ramené à 1 mm d'épaisseur).

Cet article a la souplesse d'un article de caoutchouc et peut être plié sans garder de marque.

## Revendications

1. Article tubulaire composite caractérisé en ce qu'il est formé d'une gaine externe d'un élastomère vulcanisé contenant des fonctions acide carboxylique ou anhydride de diacide carboxylique, directement associée à un tube d'élastomère thermoplastique polyéther à blocs polyamide ayant un point de fusion compris entre 120° et 210°C et un point Vicat compris entre 100 et 200°C et en ce qu'il est obtenu par gainage de l'élastomère thermoplastique polyéther à blocs polyamide, par extrusion à une température appropriée d'une composition élastomérique comportant un élastomère synthétique ou naturel contenant des fonctions acide carboxylique ou anhydride de diacide carboxylique, un système de réticulation et éventuellement divers adjuvants et charges, et en ce que la gaine de composition élastomérique est vulcanisée, à une température comprise entre - 5°C et + 30°C par rapport au point Vicat dudit élastomère thermoplastique polyéther à blocs polyamide, la cinétique de vulcanisation étant telle que la durée du cycle de vulcanisation ne dépasse pas quinze minutes et en ce que l'article tubulaire composite présente une force de pelage de la couche d'élastomère vulcanisé lors d'une sollicitation à la séparation supérieure à 2 daN/cm.

2. Article selon la revendication 1, caractérisé en ce que la face interne du tube thermoplastique est revêtue d'une couche interne d'imperméabilisation ou de protection ayant des propriétés barrière notamment à l'encontre des liquides tels que les carburants.

3. Article selon la revendication 2, caractérisé en ce que la couche interne est une couche de polyamide, notamment un polyamide 6, 66, 11 ou 12, plastifié ou non, ou leurs copolymères ou des alliages de ces polyamides avec des polyoléfines ou de polyfluorure de vinylidène éventuellement en mélange avec d'autres polymères thermoplastiques.

4. Article selon la revendication 2 ou 3, caractérisé en ce qu'une ou plusieurs couches intermédiaires sont présentes entre la couche interne d'imperméabilisation et le tube d'élastomère thermoplastique à séquences polyamide.

5. Article selon la revendication 1, caractérisé en ce que l'elastomère vulcanisé présente une déformation remanente à la compression à 100°C inférieure à 50 %.

6. Article selon la revendication 1, caractérisé en ce que l'élastomère vulcanisé est obtenu à partir des élastomères vulcanisables correspondants choisis parmi le groupe constitué par les élastomères nitrile carboxylés, les élastomères acryliques, les polybutadiènes carboxylés, les terpolymères éthylène/propylène/diène greffés ou les mélanges de ces polymères avec les mêmes élastomères mais non greffés comme les caoutchoucs nitriles, dont le caoutchouc nitrile hydrogéné (HNBR), le caoutchouc épichlorhydrine

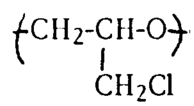

qui peut également contenir des motifs oxyde d'éthylène et/ou acétate de vinyle, les polybutadiènes, les terpolymères éthylène/propylène/diène, seuls ou en mélange.

7. Article selon la revendication 6, caractérisé en ce que les élastomères vulcanisables comportent un taux de radicaux acide carboxylique ou anhydride de diacide compris entre 0,3 et 10 % par rapport auxdits élastomères.

8. Article selon les revendications 1, 5 à 7, caractérisé en ce que l'élastomère vulcanisé comprend des charges, le

taux de charges étant de préférence compris en parties en poids entre 5 et 100 parties pour 100 parties d'élastomère vulcanisé.

9. Article selon la revendication 1, caractérisé en ce que les polyéthers à blocs polyamides ont un point Vicat compris entre 130 et 175°C.

10. Tuyau pour véhiculer du carburant, caractérisé en ce qu'il est constitué d'un article tubulaire selon l'une des revendications 1 à 9.

11. Procédé de préparation d'un article tubulaire composite selon l'une des revendications 1 à 9, caractérisé en ce que le tube d'élastomère thermoplastique polyéther à blocs polyamide est gainé, par extrusion à une température appropriée, d'une composition élastomérique comportant un élastomère synthétique ou naturel contenant des fonctions acide carboxylique ou anhydride de diacide carboxylique, un système de réticulation et éventuellement divers adjuvants et charges, et en ce que la gaine de composition élastomérique est vulcanisée, la température de vulcanisation étant comprise entre -5°C et +30°C par rapport au point Vicat dudit élastomère thermoplastique polyéther à blocs polyamide, la cinétique de vulcanisation étant telle que la durée du cycle de vulcanisation ne dépasse pas 15 minutes et que l'article tubulaire composite présente une une force de pelage de la couche d'élastomère vulcanisé supérieure à 2daN/cm.

12. Procédé selon la revendication 11, caractérisé en ce que la composition élastomérique est extrudée sur une extrudeuse d'élastomére à une température comprise entre 50° et 120°C, dans une filière de gainage dans laquelle est présent, de préférence défile à vitesse constante, un tube d'élastomère thermoplastique polyéther à blocs polyamide et l'article tubulaire non vulcanisé est placé, après découpage éventuel, dans un autoclave de vulcanisation usuel de caoutchouc (notamment à air chaud, à infrarouge) dont la température est comprise entre -5°C et +30°C par rapport au point Vicat dudit élastomère thermoplastique polyéther a blocs polyamide.

13. Procédé selon la revendication 11, caractérisé en ce que la composition élastomérique comprend des charges, le taux de charges étant de préférence compris en parties en poids entre 5 et 100 pour 100 parties d'élastomères.

14. Procédé selon la revendication 11, caractérisé en ce que la température de vulcanisation est sensiblement égale au point Vicat du tube thermoplastique polyéther a blocs polyamide avec une tolérance de ± 5°C.

15. Procédé selon la revendication 11, caractérisé en ce que le temps caractéristique de vulcanisation à 90 %, $t_{90}$ ne dépasse pas 15 minutes.

16. Procédé selon la revendication 11, caractérisé en ce que le temps caractéristique de vulcanisation à 90 %, $t_{90}$ est compris entre 5 et 10 minutes.

17. Procédé selon l'une des revendications 11, 15 ou 16, caractérisé en ce que le temps de démarrage de vulcanisation (correspondant à une augmentation de couple de 0,2 N.m) est compris entre 4 et 6 minutes.

18. Procédé selon la revendication 11, caractérisé en ce que lorsque le tube de polymères thermoplastiques contient une couche de protection de polyamide à point de fusion supérieur à 220°, par exemple du polyamide 6 ou du polyamide 66, la vulcanisation de la gaine de composition élastomérique peut être réalisée en continu, notamment dans un four UHF placé en ligne avec l'extrudeuse de gainage.

**Claims**

1. Composite tubular article characterised in that it consists of an outer sheath of a vulcanized elastomer containing carboxylic acid or dicarboxylic acid anhydride functional groups, used directly in combination with a tube of polyether thermoplastic elastomer containing polyamide blocks having a melting point of between 120° and 210°C and a Vicat point of between 100 and 200°C, and in that it is obtained by sheathing the polyether thermoplastic elastomer containing polyamide blocks, by extrusion, at a suitable temperature, of an elastomeric composition containing a synthetic or natural elastomer containing carboxylic acid functions or dicarboxylic acid anhydride functions, a crosslinking system and optionally various adjuvants and fillers, and in that the sheath of elastomeric composition is vulcanized, at a temperature between -5°C and +30°C relative to the Vicat point of the said polyether thermoplastic elastomer containing polyamide blocks, the vulcanization kinetics being such that the duration of the vulcanization cycle does not exceed fifteen minutes and in that the composite tubular article has a peel strength of the

vulcanized elastomer layer, during a separating tensile stress, of greater than 2 daN/cm.

2. Article according to Claim 1, characterized in that the inner face of the thermoplastic tube is coated with a sealing or protective inner layer which has barrier properties especially against liquids such as fuels.

3. Article according to Claim 2, characterized in that the inner layer is a layer of polyamide, especially a polyamide 6, 66, 11 or 12, plasticized or otherwise, or their copolymers or blends of these polyamides with polyolefins or polyvinylidene fluoride optionally mixed with other thermoplastic polymers.

4. Article according to Claim 2 or 3, characterized in that one or more intermediate layers are present between the sealing inner layer and the tube of thermoplastic elastomer containing polyamide blocks.

5. Article according to Claim 1, characterized in that the vulcanized elastomer exhibits a permanent compression set at 100°C which is lower than 50%.

6. Article according to claim 1, characterized in that the vulcanized elastomer is obtained from corresponding vulcanizable elastomers chosen from the group consisting of carboxylated nitrile elastomers, acrylic elastomers, carboxylated polybutadienes, grafted ethylene/propylene/diene terpolymers or mixtures of these polymers with the same elastomers, but ungrafted like nitrile rubbers, including hydrogenated nitrile rubber (HNBR), epichlorohydrin rubber

$$-\!\left(CH_2-\underset{CH_2Cl}{CH}-O\right)\!-$$

which may also contain ethylene oxide units and/or vinyl acetate units, polybutadienes, and ethylene/propylene/diene terpolymers, by themselves or mixed.

7. Article according to Claim 6, characterized in that the vulcanizable elastomers include a content of carboxylic or dicarboxylic acid anhydride radicals of between 0.3 and 10% relative to the said elastomers.

8. Article according to Claims 1, 5 to 7, characterized in that the vulcanized elastomer contains fillers, the content of fillers being preferably, in parts by weight, between 5 and 100 parts per 100 parts of vulcanized elastomer.

9. Article according to Claim 1, characterized in that the polyethers containing polyamide blocks have a Vicat point of between 130 and 175°C.

10. Tube for conveying fuel, characterized in that it consists of a tubular article according to one of Claims 1 to 9.

11. Process for the preparation of a composite tubular article according to one of Claims 1 to 9, characterized in that the tube of polyether thermoplastic elastomer containing polyamide blocks is sheathed, by extrusion at an appropriate temperature, with an elastomeric composition comprising a synthetic or natural elastomer containing carboxylic acid functions or dicarboxylic acid anhydride functionals, a crosslinking system and optionally various adjuvants and fillers, and in that the sheath of elastomeric composition is vulcanized, the vulcanization temperature being between -5°C and +30°C relative to the Vicat point of the said polyether thermoplastic elastomer containing polyamide blocks, the vulcanization kinetics being such that the duration of the vulcanization cycle does not exceed 15 minutes and that the composite tubular article exhibits a high peel strength of the vulcanized elastomer layer higher than 2 daN/cm.

12. Process according to Claim 11, characterized in that the elastomeric composition is extruded on an extruder for elastomer at a temperature of between 50° and 120°C into a sheathing die in which there is present, preferably travelling at a constant speed, a tube of polyether thermoplastic elastomer containing polyamide blocks, and the unvulcanized tubular article is placed, after optional cutting, in a conventional vulcanization autoclave for rubber (especially with hot air, with infrared) in which the temperature is between -5°C and +30°C in relation to the Vicat point of the said polyether thermoplastic elastomer containing polyamide blocks.

13. Process according to Claim 11, characterized in that the elastomeric composition includes fillers, the filler content being preferably, in parts by weight, between 5 and 100 per 100 parts of elastomers.

**14.** Process according to Claim 11, characterized in that the vulcanization temperature is substantially equal to the Vicat point of the polyether thermoplastic tube containing polyamide blocks with a tolerance of ± 5°C.

**15.** Process according to Claim 11, characterized in that the characteristic time for 90% vulcanization, $t_{90}$, does not exceed 15 minutes.

**16.** Process according to Claim 11, characterized in that the characteristic time for 90% vulcanization, $t_{90}$, is between 5 and 10 minutes.

**17.** Process according to one of Claims 11, 15 or 16, characterized in that the time of onset of vulcanization (corresponding to a torque increase of 0.2 Nm) is between 4 and 6 minutes.

**18.** Process according to Claim 11, characterized in that when the tube of thermoplastic polymers contains a protective layer of polyamide with a melting point higher than 220°, for example of polyamide 6 or of polyamide 66, the vulcanization of the sheath of elastomeric composition may be carried out continuously, especially in an UHF oven placed in line with the sheathing extruder.

**Patentansprüche**

**1.** Schlauchförmiger Verbundgegenstand, dadurch gekennzeichnet, daß er von einer äußeren Hülle aus einem vulkanisierten Elastomer mit Carbonsäure- oder Dicarbonsäureanhydridfunktionen gebildet ist, welche direkt mit einem Schlauch aus einem thermoplastischen Polyetherelastomer mit Polyamidblöcken verbunden ist, das einen Schmelzpunkt zwischen 120 °C und 210 °C und einen Vicat-Punkt zwischen 100 °C und 200 °C aufweist, und daß er durch Umhüllen des thermoplastischen, Polyamidblöcke aufweisenden Polyetherelastomers mittels Extrusion mit einer Elastomerzusammensetzung, die ein synthetisches oder natürliches Elastomer enthält, welches Carbonsäure- oder Dicarbonsäureanhydridfunktionen, ein Vernetzungssystem und gegebenenfalls verschiedene Verarbeitungshilfsmittel und Füllstoffe enthält, bei einer geeigneten Temperatur erhalten ist und daß die Hülle aus der elastomeren Zusammensetzung bei einer Temperatur zwischen - 5 °C und + 30 °C in bezug auf den Vicat-Punkt des thermoplastischen Polyetherelastomers mit Polyamidblöcken vulkanisiert ist, wobei die Vulkanisationskinetik derart ist, daß die Dauer des Vulkanisationszyklus fünfzehn Minuten nicht überschreitet, und daß der schlauchförmige Verbundgegenstand eine Entschälkraft der vulkanisierten Elastomerschicht bei Trennbeanspruchung von mehr als 2 daN/cm aufweist.

**2.** Gegenstand nach Anspruch 1, dadurch gekennzeichnet, daß die Innenfläche des thermoplastischen Schlauches mit einer inneren Schutz- oder undurchlässigen Schicht mit Sperrschichteigenschaften insbesondere gegenüber Flüssigkeiten wie Treibstoffen beschichtet ist.

**3.** Gegenstand nach Anspruch 2, dadurch gekennzeichnet, daß die innere Schicht eine Schicht eines Polyamids, insbesondere Polyamid 6, 66, 11 oder 12, oder deren Copolymeren oder von Gemengen dieser Polyamide mit Polyolefinen oder Polyvinylidenfluorid, gegebenenfalls in Mischung mit weiteren thermoplastischen Polymeren, ist

**4.** Gegenstand nach Anspruch 2 oder 3, dadurch gekennzeichnet, daß eine oder mehrere Zwischenschichten zwischen der undurchlässigen inneren Schicht und dem Schlauch aus themoplastischem Elastomer mit Polyamidsequenzen vorhanden sind.

**5.** Gegenstand nach Anspruch 1, dadurch gekennzeichnet, daß das vulkanisierte Elastomer eine dauerhafte Verformung unter Druck bei 100 °C von weniger als 50 % aufweist.

**6.** Gegenstand nach Anspruch 1, dadurch gekennzeichnet, daß das vulkanisierte Elastomer ausgehend von entsprechenden vulkanisierbaren Elastomeren erhalten ist, die ausgewählt sind aus der Gruppe von carboxylierten Nitrilelastomeren, Acrylelastomeren, carboxylierten Polybutadienen, gepfropften Ethylen/Propylen/Dien-Terpolymeren oder Mischungen dieser Polymere mit denselben, jedoch nichtgepropften Elastomeren wie Nitrilkautschuke, hierunter hydrierter Nitrilkautschuk (HNK), Epichlorhydrinkautschuk

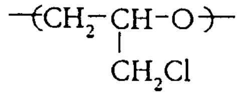

der gleichermaßen Ethylenoxid und/oder Vinylacetateinheiten enthalten kann, Polybutadiene und Ethylen/Propylen/-Dien-Terpolymere, entweder allein oder in Mischung.

7. Gegenstand nach Anspruch 6, dadurch gekennzeichnet, daß die vulkanisierbaren Elastomere einen Gehalt an Carbonsäure- oder Dicarbonsäureanhydridresten zwischen 0,3 und 10 % aufweisen, bezogen auf die Elastomere.

8. Gegenstand nach den Ansprüchen 1 und 5 bis 7, dadurch gekennzeichnet, daß das vulkanisierte Elastomer Füllstoffe enthält, wobei der Füllstoffgehalt vorzugsweise 5 bis 100 Gewichtsteile auf 100 Gewichtsteile des vulkanisierten Elastomers beträgt.

9. Gegenstand nach Anspruch 1, dadurch gekennzeichnet, daß die Polyether mit Polyamidblöcken einen Vicat-Punkt zwischen 130 °C und 175 °C aufweisen.

10. Schlauch zum Treibstofftransport, dadurch gekennzeichnet, daß er aus einem schlauchförmigen Gegenstand nach einem der Ansprüche 1 bis 9 besteht.

11. Verfahren zur Herstellung eines schlauchförmigen Verbundgegenstandes nach einem der Ansprüche 1 bis 9, dadurch gekennzeichnet, daß der Schlauch aus thermoplastischem Polyetherelastomer mit Polyamidblöcken mittels Extrusion bei einer geeigneten Temperatur mit einer elastomeren Zusammensetzung, die ein synthetisches oder natürliches Elastomer umfaßt, das Carbonsäure- oder Dicarbonsäureanhydridfunktionen, ein Vernetzungssystem und gegebenenfalls verschiedene Verarbeitungshilfsmittel und Füllstoffe enthält, umhüllt wird und daß die Umhüllung aus elastomerer Zusammensetzung vulkanisiert wird, wobei die Vulkanisierungstemperatur zwischen - 5 °C und + 30 °C in bezug auf den Vicat-Punkt des thermoplastischen Polyetherelastomers mit Polyantidblöcken liegt und die Vulkanisationskinetik derart ist, daß die Dauer des Vulkanisationszyklus fünfzehn Minuten nicht überschreitet, und daß der schlauchförmige Verbundgegenstand eine Entschälkraft der vulkanisierten Elastomerschicht von mehr als 2 daN/cm aufweist.

12. Verfahren nach Anspruch 11, dadurch gekennzeichnet, daß die elastomere Zusammensetzung über einem Extruder für das Elastomer bei einer Temperatur zwischen 50 °C und 120 °C in einer Umhüllungsdüse extrudiert wird, in welcher sich, vorzugsweise unter Extrusion mit konstanter Geschwindigkeit, ein Schlauch aus einem thermoplastischen Polyetherelastomer mit Polyamidblöcken befindet, und der nichtvulkanisierte, schlauchförmige Gegenstand, gegebenenfalls nach Abtrennung, in einen für Kautschuk üblichen Vulkanisationsautokiaven (insbesondere mit heißer Luft oder Infrarot) gebracht wird, in dem die Temperatur zwischen - 5 °C und + 30 °C in bezug auf den Vicat-Punkt des thermoplastischen Polyetherelastomers mit Polyamidblöcken liegt.

13. Verfahren nach Anspruch 11, dadurch gekennzeichnet, daß die Elastomerzusammensetzung Füllstoffe enthält, wobei der Füllstoffgehalt vorzugsweise 5 bis 100 Gewichtsteile auf 100 Gewichtsteile des vulkanisierten Elastomers beträgt.

14. Verfahren nach Anspruch 11, dadurch gekennzeichnet, daß die Vulkanisationstemperatur etwa gleich dem Vicat-Punkt des thermoplastischen Polyetherschlauches mit Polyamidfunktionen bei einer Toleranz von ± 5 °C ist.

15. Verfahren nach Anspruch 11, dadurch gekennzeichnet, daß die charakteristische Zeit für eine 90%ige Vulkanisierung, $t_{90}$, 15 Minuten nicht überschreitet.

16. Verfahren nach Anspruch 11, dadurch gekennzeichnet, daß die charakteristische Zeit für eine Vulkanisierung zu 90 %, $t_{90}$, zwischen 5 und 10 Minuten liegt.

17. Verfahren nach einem der Ansprüche 11, 15 oder 16, dadurch gekennzeichnet, daß die Anlaufzeit für die Vulkanisation (welche einem Anstieg des Drehmoments auf 0,2 N.m entspricht) zwischen 4 und 6 Minuten liegt.

18. Verfahren nach Anspruch 11, dadurch gekennzeichnet, daß, wenn der thermoplastische Polymerenschlauch eine

Schutzschicht aus einem Polyamid mit einem Schmelzpunkt oberhalb von 220 °C, wie z.B. Polyamid 6 oder Polyamid 66, enthält, die Vulkanisation der Hülle aus elastomerer Zusammensetzung kontinuierlich erfolgen kann, insbesondere in einem UHF-Ofen, der in Linie mit einer Extrusionsvorrichtung für die Umhüllung angeordnet ist.